(19) Europäisches Patentamt
European Patent Office
Office européen des brevets

(11) Publication number: 0 089 173 A2

# (12) EUROPEAN PATENT APPLICATION

(21) Application number: 83301255.2

(22) Date of filing: 08.03.83

(51) Int. Cl.[3]: B 60 R 21/10

(30) Priority: 16.03.82 GB 8207667

(43) Date of publication of application: 21.09.83 Bulletin 83/38

(84) Designated Contracting States: AT CH DE FR GB IT LI NL SE

(71) Applicant: KANGOL MAGNET LIMITED
Norfolk Street
Carlisle Cumbria CA2 5HX(GB)

(72) Inventor: Patterson, Michael
22 Currock Road
Carlisle Cumbria(GB)

(74) Representative: Jones, Ian et al,
POLLAK MERCER & TENCH High Holborn House 52-54
High Holborn
London WC1V 6RY(GB)

## (54) Vehicle seat belt retractor system.

(57) A vehicle seat belt retractor system has a belt (10) extending from a fixed end (11) through a slot in a connector (7) outwardly through a running loop (14) for use. The connector (7) is secured to narrow webbing (4) withdrawable from a small size retractor (2) with a rewind spring (19) and an emergency locking device. Emergency locking can be effected also or instead by a clamp device (24) at the position of the running loop (14). The webbing (4) can be replaced by a constant torque spring strip (30) so the rewind spring (19) is omitted. The spring strip (30) can be connected directly to the belt end. Emergency locking means (42) can act on the spring strip (30) directly instead of or in addition to the clamp device (25) acting on the belt.

FIG.1.
1
14
11
10
12
15
7
4
6
2
5

EP 0 089 173 A2

Croydon Printing Company Ltd.

VEHICLE SEAT BELT RETRACTOR SYSTEM

DESCRIPTION

The invention relates to a vehicle seat belt retractor system.

According to the invention, a vehicle seat belt retractor system comprises a vehicle seat belt retractor system in which the belt can be protracted for use against a retractive spring force and is lockable against protraction in response to a predetermined condition, and in which the retractive force is applied to the belt by way of a flexible elongate element to which the belt is connected in a manner such that movement of unit length of the belt corresponds to movement of less than unit length of the elongate element.

The connection between the elongate element and the belt can be constituted by a connector formed with a loop through which the belt freely extends from a fixed end position and to which the free end of the elongate element is connected, so that protraction of unit length of the elongate element results in the availability of twice this length of belt. Other arrangements affording different ratios between the lengths of belt and elongate element can of course be employed.

The elongate element is withdrawn from a storage device which is required to store a shorter length of the elongate element than would a storage device receiving the seat belt directly. Although the elongate element can be of the same form as the belt, it is advantageously of the smallest cross-section consistent with the necessary load bearing capabilities, so that a further reduction in the size of the storage part of the system can be achieved. The storage device can be of any suitable kind, and may be one in which the elongate element has its other end secured to a rotatable spool, urged to rotate in the belt retraction direction by a coiled spring to provide the retractive force.

Instead of a length of webbing or the like, it is possible to employ as the elongate element a coil of spring steel material, so that the elongate element itself provides the retractive force. The provision of a retractor spring in the storage device is then unnecessary.

The invention also provides a vehicle seat belt retractor comprising a seat belt, an elongate spring element biassed to coil itself around a fixed end thereof and having a free end connected to the seat belt whereby the spring element applies a retractive force against which the belt is protracted for use, and means locking the system against belt protraction in response to a predetermined condition. The connection to the belt may but need not be such that protraction of unit length of the belt corresponds to protraction of less than unit length of the coiled spring element.

The elongate spring element can in either arrangement be a constant torque spring so that the belt is not placed under higher tension the further it is extended. This renders the seat belt system more comfortable to the user.

Locking of the belt against protraction can be effected in response to either or both of a predetermined acceleration of the belt in the protraction direction or a predetermined acceleration (in which term deceleration is included) of the retractor system, and thus of the vehicle in which it is secured, such as would occur in emergency conditions.

Where the elongate element is to be unwound from a rotatable spool in a storage device, locking can be effected solely by locking the spool against rotation to the frame in which it is journalled. Alternatively, the tension in the belt or the element when such locking has taken place can be used to provide an output movement which is applied to effect clamping of the belt or the element by clamping means. By arranging for the main load to be carried by such a clamping means, the spool locking arrangements can be simplified and produced inexpensively in relatively light materials.

The system of the invention can additionally or instead include an emergency locking device of the clamping type arranged to act on the belt or the element independently in response to belt and/or vehicle acceleration. Such a locking device can conveniently be located to act on the belt at the position at which the belt extends outwardly from the storage part of the system for use. The clamping device is then advantageously arranged to receive the full load on the belt in an emergency, so that any locking means associated with the element need withstand only a relatively much smaller load and can be constructed very economically, for example of plastics material, without the use of the metal parts employed to withstand the forces to which the belt is exposed during emergency.

The invention is further described below, by way of example, with reference to the accompanying drawings, in which:

Figure 1 is a schematic side view of a first vehicle seat belt retractor system embodying the invention;

Figure 2 is a front view of the system of Figure 1;

Figures 3 and 4 are schematic side views of a second and a third such system respectively; and

Figure 4 is a schematic front view of a fourth such system.

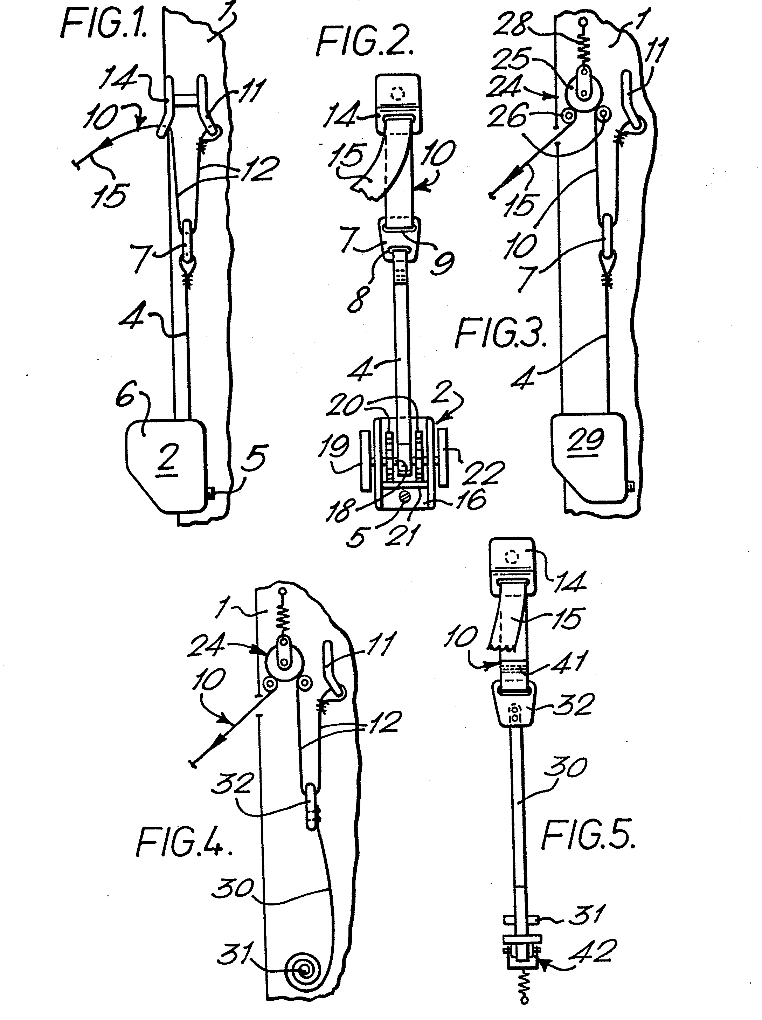

The vehicle seat belt retractor system shown in Figures 1 and 2 is intended for use with a vehicle front seat (not shown), and is installed on the vehicle side wall adjacent this seat, conveniently in a pillar 1 between the front and rear doors. Towards the lower end of the pillar 1 a retractor device 2 for webbing 4 of some 2.5 cm width is secured by means of an anchorage bolt 5.

The webbing 4 extends upwardly from the retractor device 2 through a slot in its housing 6 and its free end is permanently secured to a connector 7 which has the form of a plate with upper and lower parallel horizontal slots 8 and 9. The webbing 4 is received through the lower slot 8, and is secured to itself as by stitching. A seat belt 10, has an end secured in a similar way in a slot in a bracket 11 fixed inwardly of the trim of the pillar 1 and a portion 12 of the belt extends downwardly from this bracket to extend freely through the upper slot 9 of the connector 7 and then upwardly again to a running loop 14 fixed to the pillar 1 at the level of the bracket 11. The loop 14 is associated with an aperture in the trim of the pillar, so that a further portion 15 of the belt 10 extends from the running loop across the associated vehicle seat for use.

Typically, the running loop 14 is positioned somewhat above the shoulder of the user and the belt portion 15 extends diagonally downardly from it across the torso of the user to one part of a buckle releasably connectable to a co-operating buckle part located, say, at the level of the vehicle transmission tunnel. From the first-mentioned buckle part, the belt portion 15 extends back across the lap of the user to a fixed end position at the foot of the pillar 1.

The retractor device 2, as indicated schematically in Figure 2 with the cover 6 removed, comprises a generally channel shaped frame 16 journalling in its side webs a spool 18 on which the webbing 4 is wound. On the outer side of one of the frame side webs, the spool 18 is connected to a coiled retractor spring 19, which opposes withdrawal of the webbing from the device and is capable of winding it in again after withdrawal for use. Ratchet wheels 20 are fixed to the spool 18 to rotate therewith, and the frame 16 pivotally mounts a lockbar 21 which can be brought into engagement with the ratchet wheels so as to prevent rotation of the spool in the webbing unwinding direction. The lockbar 21 is moved to this locking position under emergency conditions by an inertial acceleration sensing device 22 located on the outer side of the other frame side web. The acceleration sensing device 22 can be responsive to one or both of a predetermined acceleration of the webbing 4 in the unwinding direction, and a predetermined acceleration of the retractor device 2 itself and thus of the vehicle in which it is secured. In this context, acceleration is to be understood to include deceleration, as would occur under emergency conditions arising from collision of the vehicle with a stationary object or another vehicle. The retractor device and its emergency locking device can be of any suitable kind and reference can be made for example to Patent Specification GB 1 213 984, Patent Publication GB 20 81 714, or Application GB 81 27 689.

When the illustrated system is out of use, the webbing 4 will be substantially completely withdrawn in the retractor device 2, and the seat belt portion 15 will extend between the running loop 14 and the lower anchorage position. When the belt portion 15 is pulled outwardly through the running loop for use, this movement will be opposed by the spring 19 acting on the webbing 4. Because the belt portion 15 is withdrawn from the portion 12 between the running loop 14 and the bracket 11, the length of webbing withdrawn from the retractor device 2 is only half that of the belt withdrawn through the running loop.

In the retractor systems shown in Figures 3, 4 and 5, parts equivalent to those of the system of Figures 1 and 2 are indicated by the same reference numerals.

In the system of Figure 3, the running loop 14 is replaced by an in-line belt locking device 24 responsive to a predetermined pull on the belt 10 to clamp this against withdrawal. The device 24 comprises a roller 25 over which the belt 10 is guided. Adjacent the lower periphery of the roller 25 are fixed two guide or snubbing bars 26 between which the belt extends. The roller 25 is biassed upwardly away from the rods 26 by a spring 28 so that the belt can normally run freely through the device. A sufficient pull on the belt 10 will overcome the bias of the spring 28 and the belt will then be jammed between the roller and the fixed bars 26. The device 24 then carries the main load of the belt and the retractor 5 can be replaced by a smaller retractor 29, from which the locking mechanism may, but need not, be omitted. A main locking device such as the device 24 can be actuated by vehicle acceleration either instead of or as well as by belt acceleration; it may be located adjacent the retractor 29 and arranged to act on the webbing 4.

In the system of Figure 4, the webbing 4 is replaced by an elongate steel strip 30, which is biassed so as to coil itself about one end which is secured to a drum 31 fixed in place in the pillar 1. The free end of the strip 30 is again secured to a connector 32 through which the belt portion 12 can freely run. The spring strip 30 can be constituted as a constant torque spring for greater comfort for the user. Locking of the system of Figure 4 in response to the sensing of emergency conditions is effected by the locking device 24.

In the system of Figure 5, the spring strip 30 is connected directly to one end of the belt 10 by means of the connector 32, the belt end being received through a slot and secured to itself by stitching 41. Protraction of the belt 10 thus corresponds to movement of an equal length of the strip 30. The belt 10 extends from the connector 32 directly through the running loop 14. Locking of the system under emergency conditions is effected by a locking device 42 which acts on the spring strip 30 directly and which can correspond to the locking device 24 but which again may be responsive also or instead to vehicle acceleration. The locking device 42 can be the only locking device of the system but a locking device such as the locking device 24 of Figures 3 and 4 can be employed to act on the belt as well or instead.

The invention can of course be embodied in various ways other than as described and appropriate features can be interchanged between the various embodiments.

CLAIMS

1. A vehicle seat belt retractor system in which the belt can be protracted for use against a retractive spring force and is lockable against protraction in response to a predetermined condition, and in which the retractive force is applied to the belt by way of a flexible elongate element to which the belt is connected in a manner such that movement of unit length of the belt corresponds to movement of less than unit length of the elongate element.

2. A system as claimed in claim 1 having a rotatable spool to which the belt is connected, the retractive spring force being supplied by a spring tending to rotate the spool so as to wind the belt thereon.

3. A system as claimed in claim 2 wherein the belt is lockable against protraction by a locking device operative to prevent rotation of the spool.

4. A system as claimed in claim 1 wherein the element has a fixed end and a free end extending to the connection with the belt, the element being biassed to coil itself around the fixed end to provide the retractive force.

5. A vehicle seat belt retractor comprising a seat belt, an elongate spring element biassed to coil itself around a fixed end thereof and having a free end connected to the seat belt whereby the spring element applies a retractive force against which the belt is protracted for use, and means locking the system against belt protraction in response to a predetermined condition.

6. A system as claimed in claim 4 or 5 wherein the elongate element comprises a constant torque spring.

7. A system as claimed in any preceding claim wherein the elongate element when protracted extends generally upright within a vehicle door pillar.

8. A system as claimed in any one of claims 1, 2 and 4 to 7 wherein the belt is lockable against protraction by locking means operative to clamp one or both of said belt and said element against movement in the direction of belt protraction in response to the predetermined condition.

9. A system as claimed in any one of claims 1 to 7 wherein the belt is lockable against protraction by a first device preventing protraction of said element in response to a predetermined acceleration condition and by a second device arranged to clamp said belt in response to consequential tension therein.

10. A system as claimed in any preceding claim wherein the belt has an end fixed to the vehicle and the elongate element is connected to the belt by means of a connector to which the element is secured and through which the belt is entrained.

11. A system as claimed in claim 10 wherein the belt is entrained through a slot in the connector whereby movement of two unit lengths of the belt corresponds to movement of unit length of the element.

FIG.1.
1
14
11
10
12
15
7
4
6
2
5
FIG.2.
14
10
15
7
9
8
4
20
2
19
22
18
16
5
21
FIG.3.
28
1
11
25
24
26
15
10
7
4
29
FIG.4.
1
24
11
10
12
32
30
31
FIG.5.
14
15
10
41
32
30
31
42